(19) Europäisches Patentamt
European Patent Office
Office européen des brevets

(11) **EP 3 865 445 B1**

(12) **EUROPEAN PATENT SPECIFICATION**

(45) Date of publication and mention
of the grant of the patent:
**03.04.2024 Bulletin 2024/14**

(21) Application number: **20157639.4**

(22) Date of filing: **17.02.2020**

(51) International Patent Classification (IPC):
***B66B 5/00*** *(2006.01)*

(52) Cooperative Patent Classification (CPC):
**B66B 5/0037**

(54) **OVERHEAT PROTECTION MECHANISM FOR BRAKE SYSTEM**

ÜBERHITZUNGSSCHUTZMECHANISMUS FÜR BREMSSYSTEM

MÉCANISME DE PROTECTION CONTRE LA SURCHAUFFE POUR UN SYSTÈME DE FREINAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.08.2021 Bulletin 2021/33**

(73) Proprietor: **KONE Corporation**
**00330 Helsinki (FI)**

(72) Inventors:
• **AITAMURTO, Juha-Matti**
**00330 Helsinki (FI)**
• **KATTAINEN, Ari**
**00330 Helsinki (FI)**

(74) Representative: **TBK**
**Bavariaring 4-6**
**80336 München (DE)**

(56) References cited:
**CN-A- 109 292 573    JP-A- 2016 222 372
US-A- 2 036 629**

## Description

BACKGROUND

Field

The present invention relates to devices, methods, systems, and computer program products usable for providing an overheat protection for a brake system, which is implementable in an elevator system.

Background Art

The following description of background art and examples may include insights, discoveries, understandings or disclosures, or associations, together with disclosures not known to the relevant prior art, to at least some examples of embodiments of the present invention but provided by the invention. Some of such contributions of the invention may be specifically pointed out below, whereas other of such contributions of the invention will be apparent from the related context.

Elevators generally comprise a several brakes, e.g. a holding brake, which is used to keep the elevator car in its position when the car is stopped at a floor level. This same brake is often used also as an emergency brake as required by elevator regulations, which brake is switched on in exceptional situations, such as during an electricity power cut. A drum brake or a disc brake, for example, can be used as a brake, wherein the brake is electromechanically operated, i.e. an electromechanical brake.

The electromechanical brake of the elevator operates normally such that when the brake is closed, the spring comprised in the active part of the brake presses a brake shoe and a brake pad connected to it against a braking surface comprised in a rotating part of the machine, in which case the elevator car stays in its position. During a run, current is supplied to an electromagnet comprised in the active part of the electromechanical brake and the magnet pulls the brake shoe and the brake pad off the braking surface, in which case the brake is open, i.e. energized, and the elevator car can move up or down in the elevator hoistway.

That is, the operation of such an electromechanical brake is such that when a brake coil is currentless, the brake remains closed as a brake pad is pressed against a braking surface by the force generated by a mechanical pressure means, e.g. a spring. When a sufficient current is conducted to the brake coil, the force produced by the magnetic field thus set up acts in a direction opposite to the force transmitted from the pressure element to the brake pad and releases the brake, permitting rotation of the traction sheave and movement of the elevator. The brake coil current needed to release the brake, the so-called operating current, is larger than the holding current, which is needed to keep the brake in the released state after it has already been released.

The brake is said to be in an energized state when released, and correspondingly in a de-energized state when the brake is closed. For operating safety, it is essential to have a possibility to get the brake into the de-energized state when necessary, which can be reliably implemented by interrupting the supply of current to the brake coil.

Further requirements for operating safety concern overheat protection. One part of this protection requirement concerns brake coil overheat protection. In particular, for brake coils, measures are to be considered which enable to prevent overheating, or an active overheat protection system is to be provided. For example, if temperature monitoring is used for overheat protection, when it is detected that the equipment exceeds its design temperature, the elevator car has to stop at a landing so that passengers can leave the elevator car. The elevator may automatically resume normal operation only after sufficient cooling, i.e. until the temperature is below a certain threshold, for example.

Embodiments of the present invention are related to a mechanism, i.e. devices, methods, systems and computer program products, by means of which the overheat protection requirements for elevators, in particular with regard the brake coil, can be achieved in an efficient and reliable way so that the safety situation in elevators can be improved while a cost increase can be prevented.

Document CN 109 292 573 A discloses a brake coil detection method, device, equipment and a storage medium. Here, first acquisition information during cold start of a brake coil is acquired; the cold state resistance value of the brake coil is determined according to the first acquisition information, and when the cold state resistance value exceeds a preset resistance value range, the brake coil is controlled to stop working.

Document JP 2016 - 222 372 A discloses an abnormality detection device which acquires a signal indicating electric current flowing in an electromagnetic brake, in order to determine whether the electromagnetic brake is in an abnormal state or not on the basis of the acquired signal. The abnormality detection device comprises: a characteristic estimation section for estimating a characteristic reflecting a state of the electromagnetic brake at abnormality diagnosis time of the electromagnetic brake; a specified value storage section for storing a specified value of abnormality detection of the electromagnetic brake; a determination section for determining whether or not the electromagnetic brake is in an abnormal state on the basis of the signal, the characteristic, and the specified value; and an output section for outputting a determination result according to the determination section.

SUMMARY

According to an embodiment, there is provided, an apparatus for use by a controller configured to control an operation of an electromagnetic brake system using at least one brake coil, wherein the electromagnetic brake system using the at least one brake coil is part of an elevator system, wherein the electromagnetic brake system is installed in an elevator machinery or an elevator car of the elevator system, the apparatus comprising means configured to obtain a resistance value of the at least one brake coil, means configured to detect an electric current flowing through the at least one brake coil, means configured to calculate a transient overload energy for the at least one brake coil, the transient overload energy representing an amount of energy dissipating in excess of a continuous limit amount of energy which the at least one brake coil is able to dissipate without exceeding a preset temperature, means configured to determine whether the transient overload energy being calculated is equal to or greater than a predetermined threshold, and means configured to, in case it is determined that the transient overload energy being calculated is equal to or greater than the predetermined threshold, trigger an overheat protection function for reducing the temperature of the at least one brake coil.

Furthermore, according to an embodiment, there is provided a method for use in a controller configured to control an operation of an electromagnetic brake system using at least one brake coil, wherein the electromagnetic brake system using the at least one brake coil is part of an elevator system, wherein the electromagnetic brake system is installed in an elevator machinery or an elevator car of the elevator system, the method comprising obtaining a resistance value of the at least one brake coil, detecting an electric current flowing through the at least one brake coil, calculating a transient overload energy for the at least one brake coil, the transient overload energy representing an amount of energy dissipating in excess of a continuous limit amount of energy which the at least one brake coil is able to dissipate without exceeding a preset temperature, determining whether the transient overload energy being calculated is equal to or greater than a predetermined threshold, and in case it is determined that the transient overload energy being calculated is equal to or greater than the predetermined threshold, triggering an overheat protection function for reducing the temperature of the at least one brake coil.

According to further refinements, these examples may include one or more of the following features:

- for obtaining the resistance value of the at least one brake coil, a constant value being stored beforehand may be acquired as the resistance value, or, as the resistance value, a variable value may be determined on the basis of a measured parameter usable for deriving the resistance value and a preset function related to resistance determination;
- the measured parameter and the preset function may be dependent on a temperature affecting the at least one brake coil;

- for detecting the electric current flowing through the at least one brake coil, a root mean square value of the current may be determined;
- for calculating the transient overload energy for the at least one brake coil, equation (2) may be used for the calculation:

$$E_t = I^2 R t - I_n^2 R t \quad ...(2)$$

wherein $E_t$ represents the transient overload energy, I represents an actual measure current value or a root mean square value of the current of the at least one brake coil, $I_n$ represents a current related parameter representing an inherent value of the at least one brake coil, wherein the current related parameter is one of a nominal current value of the at least one brake coil, a nominal root mean square value of the current of the at least one brake coil, a continuous current rating of the at least one brake coil, or a root mean square value of the continuous current rating of the at least one brake coil, R represents the resistance value of the at least one brake coil, and t represents time;
- for calculating the transient overload energy for the at least one brake coil, an effect of a temperature coupling of another element to the at least one brake coil causing a heating or cooling effect may be considered, wherein the predetermined threshold may be adapted according to the heating or cooling effect by increasing the predetermined threshold in case of cooling and decreasing the predetermined threshold in case of heating;
- the other element having a temperature coupling to the at least one brake coil may be a mechanical element, wherein the heating or cooling effect of the mechanical element to the brake coil may be determined by measuring a temperature of the mechanical element;
- the other element having a temperature coupling to the at least one brake coil may be an ambient medium in which the brake coil is placed, wherein the heating or cooling effect of the ambient medium to the brake coil may be determined by measuring an environmental temperature;
- the overheat protection function being triggered in case it is determined that the transient overload energy is equal to or greater than the predetermined threshold may comprise to stop the elevator car at a landing, and to stop operation of the elevator system until a temperature of the at least one brake coil has reached a preset release temperature;
- when the overheat protection function is triggered, a notification may be sent to an external monitoring system, the notification indicating that the overheat protection function is triggered.

In addition, according to embodiments, there is provided a computer program product according to claim 12. The computer program product may include a computer-readable medium on which said software code portions are stored. Furthermore, the computer program product may be directly loadable into the internal memory of the computer or transmittable via a network by means of at least one of upload, download and push procedures.

BRIEF DESCRIPTION OF THE DRAWINGS

Some embodiments of the present invention are described below, by way of example only, with reference to the accompanying drawings, in which:

Fig. 1 shows a schematic diagram illustrating a configuration of an elevator system where some examples of embodiments are implementable;

Fig. 2 shows a block circuit diagram of a configuration of an electromagnetic brake system and related equipment according to some examples of embodiments;

Fig. 3 shows a flow chart of a processing conducted in an overheat protection processing according to some examples of embodiments; and

Fig. 4 shows a diagram of a configuration of a controller configured to conduct an overheat protection processing according to some examples of embodiments.

DESCRIPTION OF EMBODIMENTS

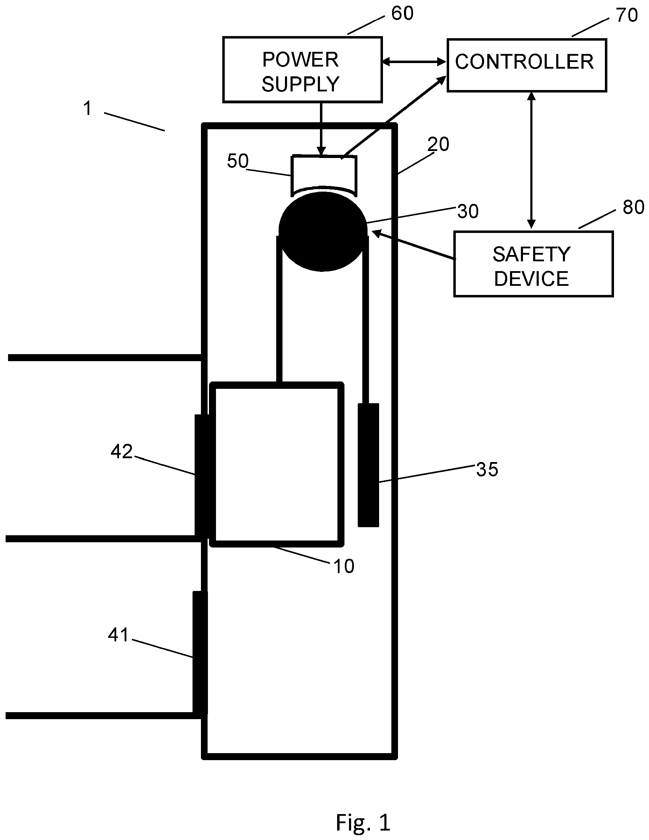

In the following, different exemplifying embodiments will be described using, as an example of an elevator system to which the embodiments may be applied, an elevator system as depicted and explained in connection with Fig. 1. However, it is obvious for a person skilled in the art that principles of embodiments may also be applied to other kinds of elevator systems or lifts having e.g. driving units of different types, such as electric elevator systems, hydraulic elevator systems, rack and pinion elevator systems, and the like, wherein a plurality of landings (i.e. two or more floors) are reachable by one or more elevator cars in a corresponding number of elevator shafts. That is, examples of embodiments of the invention are applicable to a wide range of different kinds of elevator systems, such as traction elevators, winding elevators, hydraulic elevators, as well as to different kinds of suspension/roping configurations.

It is to be noted that the following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules etc. that have not been specifically mentioned.

The general elements and functions of described elevator systems, details of which also depend on the actual type of elevator system, are known to those skilled in the art, so that a detailed description thereof is omitted herein. However, it is to be noted that several additional devices and functions besides those described below in further detail may be employed in an elevator system.

Furthermore, elevator system elements, in particular operation elements, control elements or detection elements, as well as corresponding functions as described herein, and other elements, functions or applications may be implemented by software, e.g. by a computer program product for a computer, and/or by hardware. For executing their respective functions, correspondingly used devices, elements or functions may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means etc.) and the like. It is to be noted that in the present specification processing portions should not be only considered to represent physical portions of one or more processors, but may also be considered as a logical division of the referred processing tasks performed by one or more processors.

Fig. 1 shows a schematic diagram illustrating a configuration of an elevator system 1 where some examples of embodiments are implementable. It is to be noted that examples of embodiments are not limited to an elevator system structure with the number of levels, elevator cars and elevator shafts as shown in Fig. 1. Rather, the number of elements, functions, and structures may be different to that indicated in Fig. 1, i.e. there may be implemented or present more (or less) of the corresponding levels, elevator cars and elevator shafts than those shown in Fig. 1.

In Fig. 1, reference sign 10 denotes an elevator car containing an elevator cabin for transporting persons between the floors of a building or the like. The elevator car 10 is located and travels in a hoistway or elevator shaft 20 which reaches at least from the lowest floor to the highest floor and includes further spaces for accommodating, for example, devices used for driving and stopping the elevator car. Such devices comprises, without being limited thereto or being necessary in any system, for example, a moving system including e.g. a motor and a drive unit 30, a counterweight 35, guiding rails, ropes or belts, brake systems at the drive unit (e.g. element 50) and the elevator car/hoistway, a power supply 60, a controller 70, a safety device 80 etc., which may be installed in the elevator shaft, at the elevator car, or at another external location, for example, an elevator machinery room etc. (not shown). The elevator system 1 further comprises one or more control units which may be provided at different locations, such as the elevator car 10 or in a control room or the like. The control units are responsible, for example, for operation of the elevator system 1, such as driving and braking control, power supply control, emergency control, safety procedure control, and the like. Moreover, operation panels in the elevator cabin and at each landing are provided which are coupled to the control units by suitable signaling links. Furthermore, several sensors are provided in the elevator system 1, such as a speed sensor, a door zone sensor, temperature sensors, and the like.

At each floor or landing, a landing door 41, 42 is provided for allowing entering or leaving the elevator cabin when the elevator car 10 has stopped at this floor. In the example illustrated in Fig. 1, it is assumed that the elevator car 10 has stopped on the second floor so that in a normal operation mode landing door 42 would be opened. In such a normal operation mode, the other landing doors are to be closed, which is indicated in Fig. 1 for landing door 41.

In the elevator system 1 according to Fig. 1, the elevator car 10 and the counterweight 35 are supported with elevator ropes passing via a traction sheave of the elevator drive unit 30. The traction sheave is integrated into the rotor of a machine of the elevator drive unit. The operation of the elevator system 1 is controlled with the control system of the elevator system 1.

The power supply of the elevator machine that moves the elevator car 10 comprises, for example, a connection to the electricity network and a frequency converter (not shown). A permanent-magnet synchronous motor may be used here as the elevator motor. The controller 70 may control the movement of the elevator car by measurement of the rotation of the motor in the drive unit 30 using e.g. an encoder. The current to be supplied to the elevator motor is adjusted with the frequency converter such that the measured speed of the traction sheave adjusts to correspond to the reference value for speed. The aforementioned reference value for speed is calculated as a function of the position of the elevator car 10 moving in the elevator hoistway 20.

The controller 70 of the elevator system 1 is also connected to the safety device 80 which comprises different safety elements or functions, by means of which the safety of the elevator system 1 is ensured both during normal operation and also in different exceptional operating situations and malfunction situations. These types of safety elements or functions are e.g. a brake control unit of the elevator machine, a supervision unit for overspeed of the elevator car, and also the supervision unit for the position of the landing doors.

The brake system, e.g. the brake system 50 located at the drive unit, comprises, for example, one or more electromechanical brakes, which connect to the braking surface of a rotating part to prevent movement e.g. of the traction sheave. The electromechanical brakes are fitted, for example, in connection with a rotating part of the elevator machine. Control of the brake occurs by supplying a brake current to an excitation winding of the brakes from the electricity supply unit 60 of the brake. The electricity supply circuit may also comprise a control loop for adjusting the brake current. The brake current is measured and adjusted towards a brake current reference.

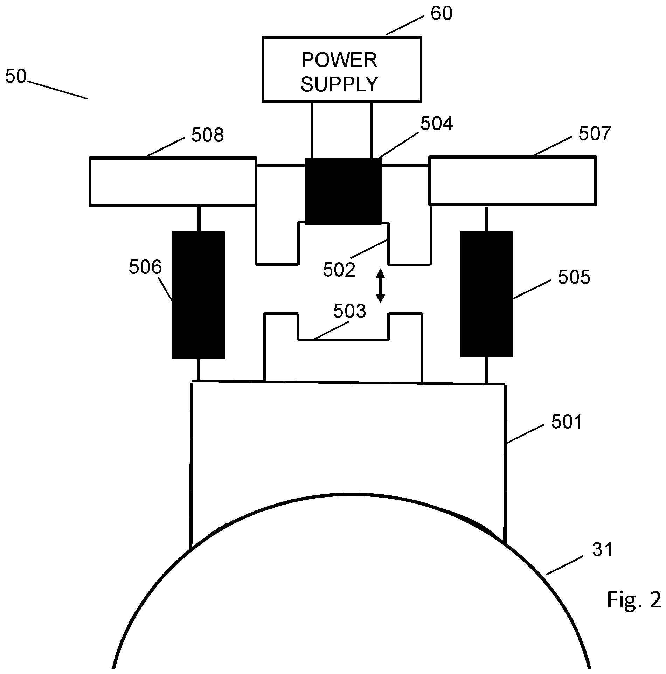

Fig. 2 shows a schematic diagram of a configuration of a brake system 50 as shown in Fig. 1 comprising an electromechanical brake configuration.

The electromechanical brake shown in Fig. 2 comprises a magnetic circuit, which comprises at least two ferromagnetic parts 502, 503, fitted to move in relation to each other. The first ferromagnetic part 502 is fixed to the stationary part (illustrated by reference signs 507, 508) of the elevator machine, and the second ferromagnetic part 503 is attached to a brake pad 501, which is fitted to connect to a braking surface 31. In this case a thrusting force is exerted between the ferromagnetic parts 502, 503 via two springs 505, 506 attached to the fixed parts 507, 508, respectively, which thrusting force presses the brake pad 501 against the braking surface 31.

An excitation winding or brake coil 504 is wound around the first ferromagnetic part 502 of the iron core of the magnetic circuit of the brake 50. The current supply to the excitation winding 504 produces a force of attraction between the ferromagnetic parts 502, 503, in which case when the current and at the same time the force of attraction progressively increase, the second ferromagnetic part 503 of the magnetic circuit finally starts to move towards the first ferromagnetic part 502, pulling at the same time the brake pad 501 away from the braking surface 31. An air gap (indicated by an arrow) of the magnetic circuit between the first and second ferromagnetic parts 502, 503 starts to decrease, and finally goes to zero when the magnetic circuit closes. At the same time the brake opens, and the traction sheave can rotate. Correspondingly, when the current of the brake coil progressively decreases, the second ferromagnetic part 503 of the magnetic circuit finally starts to move away from the first ferromagnetic part 502, pressing at the same time the brake pad 501 against the braking surface 31. In this case the brake closes to prevent movement of the traction sheave.

The arrangement according to Fig. 2 also shows the power supply 60 of the brake, which comprises, for example, a controllable switch, e.g. a relay, a MOSFET transistor, and/or an IGBT transistor, for adjusting the current of the brake coil 504. A controller may be connected to a control pole of the controllable switch, which adjusts the measured current of the brake coil towards the desired current.

In an elevator system 1 as shown in Fig. 1 having a brake system as described, for example, in connection with Fig. 2, requirements for overheat protection are to be considered. For example, regarding overheat protection, it has to be ensured that elements such as a motor and a brake coil have measures to prevent overheating or have overheat protection. For example, in case temperature monitoring is used for overheat protection, when it is detected that an equipment exceeds a predetermined temperature, e.g. a corresponding design temperature guaranteeing proper function, the elevator car has to stop at a suitable landing so that the passengers can leave the car. The lift will automatically resume normal operation only after sufficient cooling. Furthermore, when the overheat protection is triggered, according to further examples of embodiments, a notification, e.g. a signal, an information element, a data package or the like, indicating that the overheat protection function is being triggered, is sent to an external monitoring system or the like, such as a remote monitoring center, a cloud based server for a remote monitoring or condition monitoring purposes, or the like.

For the purpose of overheat protection, according to the examples of embodiments of the Invention, an overheating protection mechanism is provided which is based on brake current measurement without additional sensors (e.g. PTC) on the brake coil. Specifically, brake winding overheat protection is provided by means of a so-called $i^2t$ measurement.

Resistive losses in a brake winding (e.g. brake coil 504 in Fig. 2) which cause heating energy are based on following equation (1).

$$E = Pt = I^2Rt \dots (1)$$

Here, E is a heating energy, P is a power converting the electrical energy into thermal energy, I is an actual brake current, R is a brake coil resistance, and t is time.

A continuous current rating $I_n$ of the brake is determined as a maximum amount of power Pmax (

$P_{max} = I_n^2R$ ) which a brake can continuously dissipate without exceeding its temperature limits. For a given brake configuration, having a winding resistance R, it can be assumed that an energy dissipated in excess of the continuous limit is given by the following equation (2):

$$E_t = (P - P_{max})t = I^2Rt - I_n^2Rt \dots (2)$$

Here, $E_t$ is a transient overload energy, I is the actual brake current, $I_n$ is a current related parameter representing an inherent value of the at least one brake coil, and t is time.

Preferably, the current related parameter $I_n$ representing the inherent value of the brake is a nominal current of the brake which may be used in the equation (2) for determining the transient overload energy $E_t$. Alternatively, $I_n$ is a continuous current rating of the brake.

Furthermore, as additional preferable examples of embodiments, for the parameters used in equation (2), root mean square (RMS) values of the actual brake current I and/or the continuous current rating $I_n$ of the brake and/or the nominal brake current may be used for calculating the transient overload energy Et.

According to examples of embodiments, a brake overheat protection is achieved by continuously monitoring this transient overload energy Et.

On the basis of the monitoring, a suitable overheat protection function is triggered when transient overload energy exceeds set limit.

According to further examples of embodiments, in the drive unit, e.g. the hoisting machine, the hoisting motor and the electromechanical brake are coupled together with mechanical linkage allowing a heat transfer. Due to this coupling, effects regarding cooling or heating of the brake coil can be achieved. In case this relationship is known, the corresponding cooling or heating effect can be considered or compensated in the monitoring process. For example, a motor winding temperature measurement can be used as input parameters wherein depending on the measurement result an offset in the transient overload energy comparison can be considered. For example, when motor temperature is low, a higher overload transient energy can be accepted, and vice versa. The motor temperature can be measured, for example, by sensors which are already part of motor configurations, such as NTC/PTC resistors being used for motor overheat protection.

According to further examples of embodiments, also the ambient temperature can be considered. For example, when the ambient air temperature is low, heat transfer to air is higher than when air temperature is high. This can be considered on the basis of an ambient temperature measurement for which also existing sensors in the elevator system can be used.

As indicated above, for calculating the transient overload energy, the resistance of the brake coil has to be known. For example, according to some examples of embodiments, it is possible to assume that this resistance value is constant. In this case, a corresponding value can be stored and used when calculating the transient overload energy using the measured current value.

Alternatively, the resistance value to the brake can be assumed to be a variable, e.g. based on a present temperature of the brake coil. In such a situation, the present resistance value is determined on the basis of a preset relation or function, such as a manufacturing/factory set parameter/function, which is dependent on a present temperature, for example. The present temperature is e.g. measured by using a sensor or estimated on the basis of a suitable parameter.

It is to be noted that while examples of embodiments are related to machinery brakes of an elevator system, the present invention is also applicable to overheat protection mechanisms related to other brakes, e.g. to elevator car brakes or the like. Also other brake systems using an electromechanical brake system can implement such an overheat protection mechanism as described herein.

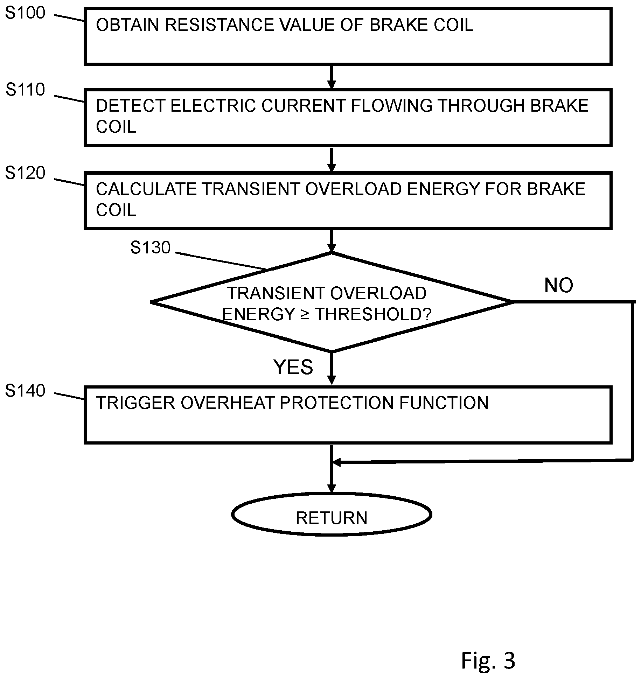

Fig. 3 shows a flow chart of a processing conducted in a overheat protection processing according to some examples of embodiments. Specifically, the example according to Fig. 3 is related to a procedure conducted by the controller 70 of Fig. 1 for protecting at least one brake coil mounted e.g. in an electromagnetic brake installed in an elevator machinery or an elevator car of the elevator system 1.

In S100, a resistance value of the at least one brake coil is obtained. For example, the resistance value of the at least one brake coil is obtained by acquiring a constant value being stored beforehand as the resistance value. Alternatively, it is possible that the resistance value is determined on the basis of an electrical measurement or the like, that is, a variable value is determined on the basis of a measured parameter usable for deriving the resistance value, wherein a preset function related to resistance determination is used to derive from the measured parameter the resistance value (such as resistance calculation based on measured voltage and/or current values, and the like). It is to be noted that the measured parameter and the preset function used for determining the present resistance value are dependent, for example, on a temperature affecting the at least one brake coil.

In S110, an electric current presently flowing through the at least one brake coil is detected. For example, a determination of the electric current flowing through the at least one brake coil comprises determining a root mean square (RMS) value of the current.

In S120, a transient overload energy for the at least one brake coil is calculated. As indicated above, the transient overload energy represents an amount of energy dissipating in excess of a continuous limit amount of energy which the at least one brake coil is able to dissipate without exceeding a preset temperature. For example, the transient overload energy for the at least one brake coil is calculated by using the following equation (2) for the calculation:

$$E_t = I^2 Rt - I_n^2 Rt \quad \dots (2).$$

Here, $E_t$ represents the transient overload energy, I represents an actual measure current value or a root mean square value of the current of the at least one brake coil (i.e. the value determined in S110), $I_n$ represents $I_n$ represents a current related parameter representing an inherent value of the at least one brake coil, wherein the current related parameter is one of a nominal current value of the at least one brake coil, a nominal root mean square value of the current of the at least one brake coil, a continuous current rating of the at least one brake coil, or a root mean square value of the continuous current rating of the at least one brake coil, R represents the resistance value of the at least one brake coil (i.e. the value determined in S100), and t represents time.

In S130, it is determined whether the transient overload energy being calculated is equal to or greater than a predetermined threshold.

In case the determination result in S130 is affirmative, i.e. the transient overload energy being calculated in S120 is equal to or greater than the predetermined threshold, the process proceeds to S140, in which an overheat protection function for reducing the temperature of the at least one brake coil is triggered.

For example, the overheat protection function being triggered in S140 comprises to stop the elevator car at a landing, and to stop a further operation of the elevator system until a temperature of the at least one brake coil has reached a preset release temperature, i.e. a temperature at which it is assumed that the brake coil has cooled down by a sufficient amount.

Furthermore, as an option in combination with S140, when the overheat protection is triggered, according to further examples of embodiments, a notification, e.g. a signal, an information element, a data package or the like, indicating that the overheat protection function is being triggered, is sent to an external monitoring system or the like, such as a remote monitoring center, a cloud based server for a remote monitoring or condition monitoring purposes, or the like.

Otherwise, in case it is determined in S130 that the transient overload energy being calculated is not equal to or greater than the predetermined threshold, the process returns without triggering the overheat protection procedure.

According to further examples, the calculation of the transient overload energy for the at least one brake coil in S120 further considers an effect of a temperature coupling of another element to the at least one brake coil causing a heating or cooling effect. In this case, the predetermined threshold is adapted according to the heating or cooling effect by increasing the predetermined threshold in case of cooling and decreasing the predetermined threshold in case of heating. For example, the another element having a temperature coupling to the at least one brake coil is a mechanical element (for example, another machinery element being located such that it works as some sort of heat dissipation element for the brake coil, or a machinery element causing additional heating of the brake coil), wherein the heating or cooling effect of the mechanical element to the brake coil is determined by measuring a temperature of the mechanical element. Alternatively or additionally, the other element having a temperature coupling to the at least one brake coil is an ambient medium in which the brake coil is placed (e.g. the ambient air), wherein the heating or cooling effect of the ambient medium to the brake coil is determined by measuring an environmental temperature.

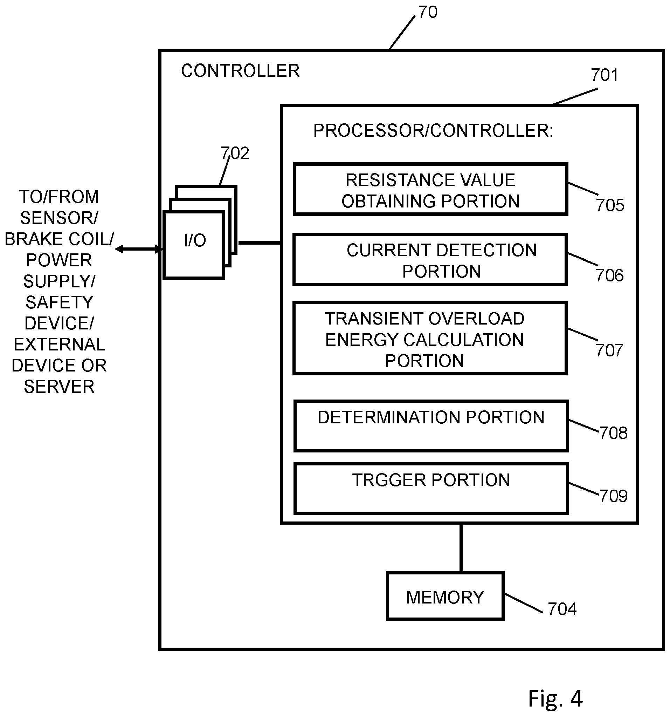

Fig. 4 shows a diagram of a configuration of an overheat protection device according to some examples of embodiments, which is configured to implement an overheat protection procedure for an elevator system as described in connection with some of the examples of embodiments. It is to be noted that the overheat protection device, which comprises a function of the controller 70 of Fig. 1, may include further elements or functions besides those described herein below. Furthermore, even though reference is made to a device like a controller, the device or function may be also another device or function having a similar task, such as a chipset, a chip, a module, an application etc., which can also be part of a controller or attached as a separate device to a controller, or the like. It should be understood that each block and any combination thereof may be implemented by various means or their combinations, such as hardware, software, firmware, one or more processors and/or circuitry.

The overheat protection device 70 shown in Fig. 4 may include a processing circuitry, a processing function, a control unit or a processor 701, such as a CPU or the like, which is suitable for executing instructions given by programs or the like related to the control procedure. The processor 701 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 702 denotes input/output (I/O) units or functions (interfaces) connected to the processor or processing function 701. The I/O units 702 may be used for communicating with the other elements or function as described in connection with Fig. 1, for example, the power supply 60, the safety device 80, sensors and the like. Furthermore, the I/O units 702 may be used for communicating with an external monitoring system, such as a remote monitoring center, a cloud based server for a remote monitoring or condition monitoring purposes, or the like for providing a notification about a overheat protection triggering. The I/O units 702 may be a combined unit including interface or communication equipment towards several elements, or may include a distributed structure with a plurality of different interfaces for different elements. Reference sign 704 denotes a memory usable, for example, for storing data and programs to be executed by the processor or processing function 701 and/or as a working storage of the processor or processing function 701. It is to be noted that the memory 704 may be implemented by using one or more memory portions of the same or different type of memory.

The processor or processing function 701 is configured to execute processing related to the above described overheat protection procedures. In particular, the processor or processing circuitry or function 701 includes one or more of the following sub-portions. Sub-portion 705 is a processing portion which is usable as a portion for obtaining a resistance value of the brake coil. The portion 705 may be configured to perform processing according to S100 of Fig. 3. Furthermore, the processor or processing circuitry or function 701 may include a sub-portion 706 usable as a portion for detecting a current flowing through the brake coil. The portion 706 may be configured to perform a processing according to S110 of Fig. 3. In addition, the processor or processing circuitry or function 701 may include a sub-portion 707 usable as a portion for calculating a transient overload energy. The portion 707 may be configured to perform a processing according to S120 of Fig. 3. Moreover, the processor or processing circuitry or function 701 may include a sub-portion 708 usable as a portion for conducting a determination processing. The portion 708 may be configured to perform a processing according to S130 of Fig. 3. In addition, the processor or processing circuitry or function 701 may include a sub-portion 709 usable as a portion for triggering an overheat protection function. The portion 709 may be configured to perform a processing according to S140 of Fig. 3. It is to be noted that sub-portion 709, or a separate sub-portion (not illustrated) may be configured to cause sending of a notification regarding triggering of the overheat protection function to an external monitoring system.

As described above, according to some examples of embodiments, devices and procedures allowing to provide overheating protection based on brake current measurement without the need for additional sensors (e.g. a PTC) on brake coil are described. By means of these devices and procedures, it is possible improve safety of an elevator system, while additional costs due to the provision of specified sensors of the like can be avoided. Moreover, examples of embodiments are easy to implement. Furthermore, also already installed elevator systems can be modified, e.g. by software update, to allow application of the invention. When using sensors being installed at the elevator car, no additional means in the elevator system are required.

Furthermore, according to examples of embodiments as described above, there is provided, as one aspect (referred to as aspect 1) a method for use in a controller configured to control an operation of an electromagnetic brake system using at least one brake coil, the method comprising obtaining a resistance value of the at least one brake coil, detecting an electric current flowing through the at least one brake coil, calculating a transient overload energy for the at least one brake coil, the transient overload energy representing an amount of energy dissipating in excess of a continuous limit amount of energy which the at least one brake coil is able to dissipate without exceeding a preset temperature, determining whether the transient overload energy being calculated is equal to or greater than a predetermined threshold, and in case it is determined that the transient overload energy being calculated is equal to or greater than the predetermined threshold, triggering an overheat protection function for reducing the temperature of the at least one brake coil.

According to a further aspect (referred to as aspect 2), in the method according to aspect 1, the obtaining of the resistance value of the at least one brake coil further comprises acquiring a constant value being stored beforehand as the resistance value, or determining, as the resistance value, a variable value on the basis of a measured parameter usable for deriving the resistance value and a preset function related to resistance determination.

According to a further aspect (referred to as aspect 3), in the method according to aspect 2, the measured parameter and the preset function are dependent on a temperature affecting the at least one brake coil.

According to a further aspect (referred to as aspect 4), in the method according to any of aspects 1 to 3, detecting the electric current flowing through the at least one brake coil comprises determining a root mean square value of the current.

According to a further aspect (referred to as aspect 5), in the method according to any of aspects 1 to 4, the calculating of the transient overload energy for the at least one brake coil further comprises using equation (2) for the calculation:

$$E_t = I^2 Rt - I_n^2 Rt \quad …(2)$$

wherein $E_t$ represents the transient overload energy, I represents an actual measure current value or a root mean square value of the current of the at least one brake coil, $I_n$ represents a current related parameter representing an inherent value of the at least one brake coil, wherein the current related parameter is one of a nominal current value of the at least one brake coil, a nominal root mean square value of the current of the at least one brake coil, a continuous current rating of the at least one brake coil, or a root mean square value of the continuous current rating of the at least one brake coil, R represents the resistance value of the at least one brake coil, and t represents time.

According to a further aspect (referred to as aspect 6), in the method according to any of aspects 1 to 5, calculating of the transient overload energy for the at least one brake coil further comprises considering an effect of a temperature coupling of another element to the at least one brake coil causing a heating or cooling effect, wherein the predetermined threshold is adapted according to the heating or cooling effect by increasing the predetermined threshold in case of cooling and decreasing the predetermined threshold in case of heating.

According to a further aspect (referred to as aspect 7), in the method according to aspect 6, the other element having a temperature coupling to the at least one brake coil is a mechanical element, wherein the heating or cooling effect of the mechanical element to the brake coil is determined by measuring a temperature of the mechanical element.

According to a further aspect (referred to as aspect 8), in the method according to aspect 6 or 7, the other element having a temperature coupling to the at least one brake coil is an ambient medium in which the brake coil is placed, wherein the heating or cooling effect of the ambient medium to the brake coil is determined by measuring an environmental temperature.

According to a further aspect (referred to as aspect 9), in the method according to any of aspects 1 to 8, the electromagnetic brake system using the at least one brake coil is part of an elevator system, wherein the electromagnetic brake system is installed in an elevator machinery or an elevator car of the elevator system.

According to a further aspect (referred to as aspect 10), in the method according to aspect 9, the overheat protection function being triggered in case it is determined that the transient overload energy is equal to or greater than the predetermined threshold comprises to stop the elevator car at a landing, and to stop operation of the elevator system until a temperature of the at least one brake coil has reached a preset release temperature.

According to a further aspect (referred to as aspect 11), the method according to any of aspects 1 to 10 further comprises causing, when the overheat protection function is triggered, sending a notification to an external monitoring system, the notification indicating that the overheat protection function is triggered.

It should be appreciated that

- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).

- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,

- a device may be implemented by a semiconductor chip, a chipset, or a (hardware) module including such chip or chipset;

- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.

- embodiments may also be implemented as computer program products, including a computer usable medium having a computer readable program code embodied therein, the computer readable program code adapted to execute a process as described in embodiments, wherein the computer usable medium may be a non-transitory medium.

**Claims**

1. Apparatus for use by a controller (70) configured to control an operation of an electromagnetic brake system (50) using at least one brake coil (504), wherein the electromagnetic brake system (50) is part of an elevator system (1), wherein the electromagnetic brake system (50) is installed in an elevator machinery or an elevator car (10) of the elevator system (1), the apparatus comprising

means (705) configured to obtain a resistance value of the at least one brake coil (504), means (706) configured to detect an electric current flowing through the at least one brake coil (504),

**characterized in that** the apparatus further comprises:

means (707) configured to calculate a transient overload energy for the at least one brake coil (504), the transient overload energy representing an amount of energy dissipating in excess of a continuous limit amount of energy which the at least one brake coil (504) is able to dissipate without exceeding a preset temperature, means (708) configured to determine whether the transient overload energy being calculated is equal to or greater than a predetermined threshold, and means (709) configured to, in case it is determined that the transient overload energy being calculated is equal to or greater than the predetermined threshold, trigger an overheat protection function for reducing the temperature of the at least one brake coil (504).

2. The apparatus according to claim 1, wherein the means (705) configured to obtain the resistance value of the at least one brake coil (504) is configured

to acquire a constant value being stored beforehand as the resistance value, or to determine, as the resistance value, a variable value on the basis of a measured parameter usable for deriving the resistance value and a preset function related to resistance determination.

3. The apparatus according to claim 2, wherein the measured parameter and the preset function are dependent on a temperature affecting the at least one brake coil (504).

4. The apparatus according to any of claims 1 to 3, wherein the means (706) configured to detect the electric current flowing through the at least one brake coil (504) determine a root mean square value of the current.

5. The apparatus according to any of claims 1 to 4, wherein the means configured to calculate the transient overload energy for the at least one brake coil are configured to use equation (2) for the calculation:

$$E_t = I^2 Rt - I_n^2 Rt \quad ...(2)$$

wherein $E_t$ represents the transient overload energy, I represents an actual measure current value or a root mean square value of the current of the at least one brake coil (504), $I_n$ represents a current related parameter representing an inherent value of the at least one brake coil (504), wherein the current related parameter is one of a nominal current value of the at least one brake coil (504), a nominal root mean square value of the current of the at least one brake coil (504), a continuous current rating of the at least one brake coil (504), or a root mean square value of the continuous current rating of the at least one brake coil, R represents the resistance value of the at least one brake coil (504), and t represents time.

**6.** The apparatus according to any of claims 1 to 5, wherein

the means (707) configured to calculate the transient overload energy for the at least one brake coil (504) are further configured to consider an effect of a temperature coupling of another element to the at least one brake coil (504) causing a heating or cooling effect, wherein the predetermined threshold is adapted according to the heating or cooling effect by increasing the predetermined threshold in case of cooling and decreasing the predetermined threshold in case of heating.

**7.** The apparatus according to claim 6, wherein the other element having a temperature coupling to the at least one brake coil (504) is a mechanical element, wherein the heating or cooling effect of the mechanical element to the brake coil (504) is determined by measuring a temperature of the mechanical element.

**8.** The apparatus according to claim 6 or 7, wherein the other element having a temperature coupling to the at least one brake coil (504) is an ambient medium in which the brake coil is placed, wherein the heating or cooling effect of the ambient medium to the brake coil (504) is determined by measuring an environmental temperature.

**9.** The apparatus according to claim 1, wherein

the overheat protection function being triggered in case it is determined that the transient overload energy is equal to or greater than the predetermined threshold comprises to stop the elevator car (10) at a landing (42), and to stop operation of the elevator system (1) until a temperature of the at least one brake coil (504) has reached a preset release temperature.

**10.** The apparatus according to any of claims 1 to 9, further comprising means configured to cause, when the overheat protection function is triggered, sending a notification to an external monitoring system, the notification indicating that the overheat protection function is triggered.

**11.** Method for use in a controller (70) configured to control an operation of an electromagnetic brake system (50) using at least one brake coil (504), wherein the electromagnetic brake system (50) is part of an elevator system (10), wherein the electromagnetic brake system (50) is installed in an elevator machinery or an elevator car (10) of the elevator system (10), the method comprising

obtaining (S100) a resistance value of the at least one brake coil (504), detecting (S110) an electric current flowing through the at least one brake coil (504), calculating (S120) a transient overload energy for the at least one brake coil (504), the transient overload energy representing an amount of energy dissipating in excess of a continuous limit amount of energy which the at least one brake coil (504) is able to dissipate without exceeding a preset temperature, determining (S130) whether the transient overload energy being calculated is equal to or greater than a predetermined threshold, and in case it is determined that the transient overload energy being calculated is equal to or greater than the predetermined threshold, triggering (140) an overheat protection function for reducing the temperature of the at least one brake coil (504).

**12.** A computer program product for a computer, comprising instructions which, when the program is executed by a controller (70) using the apparatus according to claim 1, cause the apparatus to carry out the steps of the method according to claim 11.

**13.** The computer program product according to claim 12, further comprising a computer-readable medium on which said software code portions are stored.

**Patentansprüche**

**1.** Vorrichtung für eine Verwendung durch eine Steuerungsvorrichtung (70), die konfiguriert ist, einen Betrieb eines elektromagnetischen Bremssystems (50) zu steuern, das zumindest eine Bremsspule (504) verwendet, wobei das elektromagnetische Bremssystem (50) ein Teil eines Aufzugssystems (1) ist, wobei das elektromagnetische Bremssystem (50) in einer Aufzugsmaschinenanlage oder einer Aufzugskabine (10) des Aufzugssystems (1) eingebaut ist, wobei die Vorrichtung umfasst:

eine Einrichtung (705), die konfiguriert ist, einen Widerstandswert der zumindest einen Bremsspule (504) zu erhalten, eine Einrichtung (706), die konfiguriert ist, einen elektrischen Strom, der durch die zumindest eine Bremsspule (504) fließt, zu erfassen, **dadurch gekennzeichnet, dass** die Vorrichtung ferner umfasst:

eine Einrichtung (707), die konfiguriert ist, eine kurzzeitige Überlastenergie für die zumindest eine Bremsspule (504) zu berechnen, wobei die kurzzeitige Überlastenergie einen Betrag einer Energie darstellt, die über einen kontinuierlichen Grenzbetrag einer Energie hinaus abgeführt wird, die die zumindest eine Bremsspule (504) in der Lage ist abzuführen, ohne eine voreingestellte Temperatur zu überschreiten,
eine Einrichtung (708), die konfiguriert ist, zu bestimmen, ob die kurzzeitige Überlastenergie, die berechnet wird, größer oder gleich einem vorbestimmten Schwellenwert ist, und
eine Einrichtung (709), die konfiguriert ist, in einem Fall, in dem bestimmt wird, dass die kurzzeitige Überlastenergie, die berechnet wird, größer oder gleich dem vorbestimmten Schwellenwert ist, eine Überhitzungsschutzfunktion zur Verringerung der Temperatur der zumindest einen Bremsspule (504) auszulösen.

2. Vorrichtung nach Anspruch 1, wobei
die Einrichtung (705), die konfiguriert ist, den Widerstandswert der zumindest einen Bremsspule (504) zu erhalten, konfiguriert ist,

einen konstanten Wert, der zuvor gespeichert wird, als den Widerstandswert zu beschaffen, oder
einen variablen Wert auf der Grundlage eines gemessenen Parameters, der für eine Herleitung des Widerstandswerts verwendbar ist, und einer voreingestellten Funktion, die eine Widerstandsbestimmung betrifft, als den Widerstandswert zu bestimmen.

3. Vorrichtung nach Anspruch 2, wobei der gemessene Parameter und die voreingestellte Funktion von einer Temperatur abhängig sind, die die zumindest eine Bremsspule (504) beeinflusst.

4. Vorrichtung nach einem der Ansprüche 1 bis 3, wobei
die Einrichtung (706), die konfiguriert ist, den elektrischen Strom, der durch die zumindest eine Bremsspule (504) fließt, zu erfassen, einen quadratischen Mittelwert des Stroms bestimmt.

5. Vorrichtung nach einem Ansprüche 1 bis 4, wobei
die Einrichtung, die konfiguriert ist, die kurzzeitige Überlastenergie für die zumindest eine Bremsspule zu berechnen, konfiguriert ist, eine Gleichung (2) für die Berechnung zu verwenden:

$$E_t = i^2 R t - I_n^2 R t \quad ...(2)$$

wobei $E_t$ die kurzzeitige Überlastenergie darstellt, I einen Ist-Messstromwert oder einen quadratischen Mittelwert des Stroms der zumindest eine Bremsspule (504) darstellt, $I_n$ einen strombezogenen Parameter darstellt, der einen inhärenten Wert der zumindest einen Bremsspule (504) darstellt, wobei der strombezogene Parameter einer aus einem Nennstromwert der zumindest einen Bremsspule (504), einem quadratischen Nennmittelwert des Stroms der zumindest einen Bremsspule (504), einer kontinuierlichen Stromeinstufung der zumindest einen Bremsspule (504) oder eines quadratischen Mittelwerts der kontinuierlichen Stromeinstufung der zumindest einen Bremsspule ist, R den Widerstandswert der zumindest einen Bremsspule (504) darstellt und t eine Zeit darstellt.

6. Gerät nach einem der Ansprüche 1 bis 5, wobei

die Einrichtung (707), die konfiguriert ist, die kurzzeitige Überlastenergie für die zumindest eine Bremsspule (504) zu berechnen, ferner konfiguriert ist,
einen Effekt einer Temperaturkopplung eines anderen Elements an die zumindest eine Bremsspule (504), das einen Erwärmungs- oder Kühleffekt verursacht, zu berücksichtigen, wobei der vorbestimmte Schwellenwert entsprechend dem Erwärmungs- oder Kühleffekt angepasst wird, indem der vorbestimmte Schwellenwert im Fall eines Kühlens vergrößert wird und der vorbestimmte Schwellenwert im Fall eines Erwärmens verkleinert wird.

7. Gerät nach Anspruch 6, wobei das andere Element, das eine Temperaturkopplung an die zumindest eine Bremsspule (504) aufweist, ein mechanisches Element ist, wobei der Erwärmungs- oder Kühleffekt des mechanischen Elements bei der Bremsspule (504) bestimmt wird, indem eine Temperatur des mechanischen Elements gemessen wird.

8. Vorrichtung nach Anspruch 6 oder 7, wobei das andere Element, das eine Temperaturkopplung an die zumindest eine Bremsspule (504) aufweist, ein Umgebungsmedium ist, in dem die Bremsspule platziert ist, wobei der Erwärmungs- oder Kühleffekt des Umgebungsmediums bei der Bremsspule (504) bestimmt wird, indem eine Umgebungstemperatur gemessen wird.

9. Vorrichtung nach Anspruch 1, wobei
die Überhitzungsschutzfunktion, die in einem Fall ausgelöst wird, bei dem bestimmt wird, dass die kurzzeitige Überlastenergie größer oder gleich dem vorbestimmten Schwellenwert ist, umfasst:

die Aufzugskabine (10) bei einem Stockwerk (42) zu stoppen und

einen Betrieb des Aufzugssystems (1) zu stoppen, bis eine Temperatur der zumindest einen Bremsspule (504) eine voreingestellte Freigabetemperatur erreicht hat.

10. Vorrichtung nach einem der Ansprüche 1 bis 9, ferner mit:
einer Einrichtung, die konfiguriert ist, wenn die Überhitzungsschutzfunktion ausgelöst wird, ein Senden einer Benachrichtigung zu einem externen Überwachungssystem zu veranlassen, wobei die Benachrichtigung angibt, dass die Überhitzungsschutzfunktion ausgelöst ist.

11. Verfahren für eine Verwendung in einer Steuerungsvorrichtung (70), die konfiguriert ist, einen Betrieb eines elektromagnetischen Bremssystems (50) unter Verwendung zumindest einer Bremsspule (504) zu steuern, wobei das elektromagnetische Bremssystem (50) ein Teil eines Aufzugssystems (10) ist, wobei das elektromagnetische Bremssystem (50) in einer Aufzugsmaschinenanlage oder einer Aufzugskabine (10) des Aufzugssystems (10) eingebaut ist, wobei das Verfahren umfasst:

ein Erhalten (S100) eines Widerstandswerts der zumindest einen Bremsspule (504),
ein Erfassen (S110) eines elektrischen Stroms, der durch die zumindest eine Bremsspule (504) fließt,
ein Berechnen (S120) einer kurzzeitigen Überlastenergie für die zumindest eine Bremsspule (504), wobei die kurzzeitige Überlastenergie einen Betrag einer Energie darstellt, die über einen kontinuierlichen Grenzbetrag einer Energie hinaus abgeführt wird, die die zumindest eine Bremsspule (504) in der Lage ist abzuführen, ohne eine voreingestellte Temperatur zu überschreiten,
ein Bestimmen (S130), ob die kurzzeitige Überlastenergie, die berechnet wird, größer oder gleich einem vorbestimmten Schwellenwert ist, und
in einem Fall, in dem bestimmt wird, dass die kurzzeitige Überlastenergie, die berechnet wird, größer oder gleich dem vorbestimmten Schwellenwert ist, ein Auslösen (140) einer Überhitzungsschutzfunktion zum Verringern der Temperatur der zumindest einen Brennspule (504).

12. Computerprogrammprodukt für einen Computer, das Anweisungen umfasst, die, wenn das Programm durch eine Steuerungsvorrichtung (70), die die Vorrichtung gemäß Patentanspruch 1 verwendet, ausgeführt wird, die Vorrichtung veranlasst, die Schritte des Verfahrens gemäß Patentanspruch 11 auszuführen.

13. Computerprogrammprodukt nach Anspruch 12, ferner mit einem computerlesbaren Medium, auf dem die Softwarecodeabschnitte gespeichert sind.

**Revendications**

1. Appareil destiné à être utilisé par un dispositif de commande (70) conçu pour commander un fonctionnement d'un système de frein électromagnétique (50) utilisant au moins une bobine de frein (504), dans lequel le système de frein électromagnétique (50) fait partie d'un système d'ascenseur (1), dans lequel le système de frein électromagnétique (50) est installé dans une machinerie d'ascenseur ou une cabine d'ascenseur (10) du système d'ascenseur (1), l'appareil comprenant

des moyens (705) configurés pour obtenir une valeur de résistance de l'au moins une bobine de frein (504),
des moyens (706) configurés pour détecter un courant électrique circulant à travers l'au moins une bobine de frein (504), **caractérisé en ce que** l'appareil comprend en outre :

des moyens (707) configurés pour calculer une énergie de surcharge transitoire pour l'au moins une bobine de frein (504), l'énergie de surcharge transitoire représentant une quantité d'énergie se dissipant au-delà d'une quantité limite continue d'énergie que l'au moins une bobine de frein (504) est apte à dissiper sans dépasser une température prédéfinie,
des moyens (708) configurés pour déterminer si l'énergie de surcharge transitoire calculée est égale ou supérieure à un seuil prédéterminé, et
des moyens (709) configurés pour, au cas où il est déterminé que l'énergie de surcharge transitoire calculée est égale ou supérieure au seuil prédéterminé, déclencher une fonction de protection contre la surchauffe pour réduire la température de l'au moins une bobine de frein (504).

2. Appareil selon la revendication 1, dans lequel

les moyens (705) configurés pour obtenir la valeur de résistance de l'au moins une bobine de frein (504) sont configurés pour
acquérir une valeur constante stockée au préalable en tant que valeur de résistance, ou
déterminer en tant que valeur de résistance une valeur variable sur la base d'un paramètre mesuré pouvant être utilisé pour dériver la valeur de résistance et d'une fonction prédéfinie relative à la détermination de la résistance.

**3.** Appareil selon la revendication 2, dans lequel le paramètre mesuré et la fonction prédéfinie dépendent d'une température affectant l'au moins une bobine de frein (504).

**4.** Appareil selon l'une quelconque des revendications 1 à 3, dans lequel
les moyens (706) configurés pour détecter le courant électrique circulant à travers l'au moins une bobine de frein (504) déterminent une valeur efficace du courant.

**5.** Appareil selon l'une quelconque des revendications 1 à 4, dans lequel
les moyens configurés pour calculer l'énergie de surcharge transitoire pour l'au moins une bobine de frein sont configurés pour utiliser l'équation (2) pour le calcul :

$$E_t = I^2 Rt - I_n^2 Rt \ \ ...(2)$$

où Et représente l'énergie de surcharge transitoire, I représente une valeur de courant de mesure réelle ou une valeur efficace du courant de l'au moins une bobine de frein (504), $I_n$ représente un paramètre relatif au courant représentant une valeur inhérente de l'au moins une bobine de frein (504), dans lequel le paramètre relatif au courant est l'une d'une valeur nominale de courant de l'au moins une bobine de frein (504), d'une valeur efficace nominale de l'au moins une bobine de frein (504), d'un courant nominal continu de l'au moins une bobine de frein (504), ou d'une valeur efficace du courant nominal continu de l'au moins une bobine de frein, R représente la valeur de résistance de l'au moins une bobine de frein (504), et t représente le temps.

**6.** Appareil selon l'une quelconque des revendications 1 à 5, dans lequel

les moyens (707) configurés pour calculer l'énergie de surcharge transitoire pour l'au moins une bobine de frein (504) sont en outre configurés pour
tenir compte d'un effet d'un couplage de température d'un autre élément à l'au moins une bobine de frein (504) entraînant un effet de chauffage ou de refroidissement, dans lequel le seuil prédéterminé est adapté en fonction de l'effet de chauffage ou de refroidissement par l'augmentation du seuil prédéterminé en cas de refroidissement et la diminution du seuil prédéterminé en cas de chauffage.

**7.** Appareil selon la revendication 6, dans lequel l'autre élément ayant un couplage de température à l'au moins une bobine de frein (504) est un élément mécanique, dans lequel l'effet de chauffage ou de refroidissement de l'élément mécanique sur la bobine de frein (504) est déterminé par la mesure d'une température de l'élément mécanique.

**8.** Appareil selon la revendication 6 ou 7, dans lequel l'autre élément ayant un couplage de température à l'au moins une bobine de frein (504) est un milieu ambiant dans lequel la bobine de frein est placée, dans lequel l'effet de chauffage ou de refroidissement du milieu ambiant sur la bobine de frein (504) est déterminé par la mesure d'une température de l'environnement.

**9.** Appareil selon la revendication 1, dans lequel

la fonction de protection contre la surchauffe déclenchée au cas où il est déterminé que l'énergie de surcharge transitoire est égale ou supérieure au seuil prédéterminé comprend
l'arrêt de la cabine d'ascenseur (10) à un palier (42), et
l'arrêt du fonctionnement du système d'ascenseur (1) jusqu'à ce qu'une température de l'au moins une bobine de frein (504) ait atteint une température de libération prédéterminée.

**10.** Appareil selon l'une quelconque des revendications 1 à 9, comprenant en outre
des moyens configurés pour entraîner, lorsque la fonction de protection contre la surchauffe est déclenchée, l'envoi d'une notification à un système de surveillance externe, la notification indiquant que la fonction de protection contre la surchauffe est déclenchée.

**11.** Procédé destiné à être utilisé par un dispositif de commande (70) conçu pour commander un fonctionnement d'un système de frein électromagnétique (50) utilisant au moins une bobine de frein (504), dans lequel le système de frein électromagnétique (50) fait partie d'un système d'ascenseur (10), dans lequel le système de frein électromagnétique (50) est installé dans une machinerie d'ascenseur ou une cabine d'ascenseur (10) du système d'ascenseur (10), le procédé comprenant

l'obtention (S100) d'une valeur de résistance de l'au moins une bobine de frein (504),
la détection (S110) d'un courant électrique circulant à travers l'au moins une bobine de frein (504),
le calcul (S120) d'une énergie de surcharge transitoire pour l'au moins une bobine de frein (504), l'énergie de surcharge transitoire représentant une quantité d'énergie se dissipant au-delà d'une quantité limite continue d'énergie que l'au moins une bobine de frein (504) est apte à dissiper sans dépasser une température prédéfinie,

la détermination (S130) de si oui ou non l'énergie de surcharge transitoire calculée est égale ou supérieure à un seuil prédéterminé, et

au cas où il est déterminé que l'énergie de surcharge transitoire calculée est supérieure ou égale au seuil prédéterminé, le déclenchement (S140) d'une fonction de protection contre la surchauffe pour réduire la température de l'au moins une bobine de frein (504).

12. Produit programme informatique pour un ordinateur, comprenant des instructions qui, lorsque le programme est exécuté par un dispositif de commande (70) utilisant l'appareil selon la revendication 1, amènent l'appareil à exécuter les étapes du procédé selon la revendication 11.

13. Produit programme informatique selon la revendication 12, comprenant en outre un support lisible par ordinateur sur lequel sont stockées lesdites parties de code logiciel.

Fig. 1

Fig. 2

S100 — OBTAIN RESISTANCE VALUE OF BRAKE COIL

S110 — DETECT ELECTRIC CURRENT FLOWING THROUGH BRAKE COIL

S120 — CALCULATE TRANSIENT OVERLOAD ENERGY FOR BRAKE COIL

S130 — TRANSIENT OVERLOAD ENERGY ≥ THRESHOLD?    NO

YES

S140 — TRIGGER OVERHEAT PROTECTION FUNCTION

RETURN

Fig. 3

Fig. 4

**EP 3 865 445 B1**

**REFERENCES CITED IN THE DESCRIPTION**

**Patent documents cited in the description**

- CN 109292573 A

- JP 2016222372 A